# EUROPEAN PATENT APPLICATION

(11) **EP 3 569 394 A1**
(43) Date of publication of application: **20.11.2019**
(21) Application number: 18172959.1
(22) Date of filing: 17.05.2018
(51) Int. Cl.: B29C 70/88, B29D 99/00, B29C 65/50, B29C 65/00, B29C 65/48

(54) **METHOD OF MANUFACTURING A SPAR CAP**

(71) Applicant: Siemens Gamesa Renewable Energy A/S, 7330 Brande (DK)
(72) Inventor: Girolamo, Donato, 9400 Nørresundby (DK)
(74) Representative: Aspacher, Karl-Georg

(57) **Abstract**

The invention describes a method of manufacturing a wind turbine rotor blade spar cap (1), which method comprises providing a plurality of carbon profile elements (10); providing a number of adhesive film layers (11); preparing a spar cap assembly (1A) by arranging the carbon profile elements (10) in a stack (S) and arranging an adhesive film layer (11) between adjacent carbon profile elements (10) of the stack (S); and curing the spar cap assembly (1A). The invention further describes a wind turbine rotor blade spar cap (1), and a wind turbine rotor blade (2) comprising such a spar cap (1).

## Description

The invention describes a method of manufacturing a wind turbine rotor blade spar cap; a wind turbine rotor blade spar cap; and a wind turbine rotor blade.

In keeping with advances in the field of renewable energies, the dimensions of wind turbines and wind turbine rotor blades continue to increase. The use of longer (and therefore larger) wind turbine rotor blades results in the need to optimize blade design by, for example, using stiffer and lighter materials. The main design limitation of a stiffness-driven structure such as a wind turbine rotor blade is generally deflection or physical deformation. Materials for the various elements of a rotor blade are therefore generally selected on the basis of their stiffness-to-weight ratio (also referred to as its specific stiffness or specific modulus) and on the element being designed. For a critical load-bearing element such as a spar cap (also referred to as the beam), the use of carbon fibre reinforced polymer (CFRP) may be preferred over glass fibre reinforced polymer (GFRP), since CFRP has a very favourable stiffness-to-weight ratio. The spar caps in the rotor blades serve to transfer the main aerodynamic flap-wise bending loads from the rotor blades to the hub and ultimately to the foundation. A spar cap is incorporated in the rotor blade body and generally extends over a large fraction of the overall blade length. This component is usually designed with unidirectional fibre-reinforced polymers, for example pultruded CFRP elements. In the prior art, a spar cap is manufactured using vacuum assisted resin transfer moulding (VARTM), which involves preparing a dry composite layup and then using a vacuum to draw a liquid resin (e.g. epoxy) through the layup, and curing the structure. However, the structure and shape of a spar cap for a long wind turbine rotor blade makes it very difficult to prepare and optimize a process that will result in an even distribution of resin throughout the entire structure. The difficulties associated with VARTM for such a spar cap can result in defects that increase the risk of extended manufacturing errors such as transverse wrinkles, poor impregnation, air pockets, large areas with dry fibres, etc. These defects can extend over wide areas, can be very time-consuming and costly to repair and can drastically increase the cost of the spar cap. Defects that are only partially remedied can significantly reduce the reliability of the final product.

When defects are only detected after the spar cap has been incorporated into a rotor blade, they can be very expensive to repair. If repair is not possible, the entire rotor blade must be scrapped.

A particularly serious type of defect that arises when VARTM is used to bond pultruded elements is an interfacial defect in which opposing faces of the pultruded elements are in contact, but without any chemical bond between them. Such defects are referred to a "kissing bonds" or "zero volume bonds". Kissing bonds between elements of a spar cap are particularly problematic because they cannot be detected by the conventional non-destructive testing techniques, and because they drastically reduce the structural integrity of the spar cap.

It is therefore an object of the invention to provide an improved method of manufacturing a spar cap.

This object is achieved by the method of claim 1 of manufacturing a wind turbine rotor blade spar cap; by the wind turbine rotor blade spar cap of claim 7, and by the wind turbine rotor blade of claim 15.

According to the invention, the method of manufacturing a wind turbine rotor blade spar cap comprises providing a plurality of carbon profile elements; providing a number of adhesive film layers; preparing a spar cap assembly by arranging the carbon profile elements in a stack and arranging an adhesive film layer between adjacent carbon profile elements of the stack; and curing the spar cap assembly.

The cured spar cap can then be incorporated into a wind turbine rotor blade being moulded using the usual layup technique. Since the spar cap is manufactured separately and ahead of the rotor blade moulding procedure, the method essentially describes a "pre-packing/casting" stage.

An advantage of the method according to the invention is that it offers an alternative to the prior art methods that use the resin transfer moulding (RTM) technique. The inventive method requires significantly less effort and can save time as well as materials, thereby reducing the overall cost of the wind turbine rotor blade.

According to the invention, the wind turbine rotor blade spar cap comprises a plurality of carbon profile elements and a number of adhesive film layers, arranged in a stack and cured using the inventive method. The inventive spar cap can be manufactured with considerably less effort than the comparable prior art spar caps, and the cost of manufacturing a wind turbine rotor blade can be lowered by incorporating embodiments of the inventive spar cap. The structural strength and stability of the inventive spar cap has been seen to be at least as satisfactory as the prior art type of spar cap, so that the inventive spar cap makes the required contribution to performance and lifetime of the wind turbine rotor blade.

Particularly advantageous embodiments and features of the invention are given by the dependent claims, as revealed in the following description. Features of different claim categories may be combined as appropriate to give further embodiments not described herein.

The term "spar cap assembly" as used in the context of the invention shall be understood to comprise the carbon profile stack (the assembly of carbon profile elements bonded by adhesive film layers). The term "spar cap" shall be understood to comprise such a spar cap assembly as well as any other components such as wedges, enclosing layers, etc. A profile element comprising carbon-fibre reinforced polymer (CFRP) may simply be referred to as a "carbon element" in the following.

The carbon profile elements could be bonded together by spreading liquid adhesive to one carbon profile element and then arranging the next carbon profile element onto the liquid adhesive. However, such an approach is time-consuming and may lead to quality problems if the adhesive is not evenly spread, if air bubbles are trapped in the adhesive, etc. Another disadvantage of such an approach is the relatively short "open time" of adhesives, which limits the process time for spreading the adhesive on the profile elements. Therefore, in the context of the invention, it may be assumed that an adhesive film layer in its uncured state comprises an adhesive in solid sheet form. An example of such an adhesive can be a surface improvement film, generally supplied on a carrier such as a polythene sheet. Alternatively or in addition, the adhesive film layer may be provided in the form of a prepreg carbon sheet, preferably a biax carbon sheet in which the carbon fibres are arranged in two main directions. A prepreg carbon sheet comprises reinforcement fibres together with an adhesive. The main advantage of using such prepreg carbon sheets is that the fibres can be aligned in directions that are different from the longitudinal direction of the fibres in the pultruded elements, thereby improving the structural stability and orthotropy of the spar cap assembly.

In the context of the invention, a carbon element may be an off-the-shelf pultruded profile made of a carbon-reinforced material such as carbon fibres and/or tows of carbon fibres embedded in epoxy and then cured. A pultruded profile may be assumed to have a uniform thickness over its entire length, and the fibres and/or fibre tows may be assumed to be uninterrupted over the length of the profile element. In the context of the invention, it shall be understood that a orientation of the carbon fibres/tows is along a line extending from blade root to blade tip. Various manufactures offer pre-cured, thick-ply carbon fibre laminates that can be used in various applications that require structural reinforcement. In the following, it may be assumed that a carbon element is a pultruded profile in the shape of a board, i.e. essentially a rectangle with a length that significantly exceeds its width, and having a certain thickness. The thickness of a pultruded profile is chosen so that a stack of such profiles results in the desired spar cap thickness. Since the spar cap assembly is made by bonding adjacent profiles using adhesive film layers, the surface area of an adhesive film layer preferably corresponds to the surface area of a carbon profile element. An adhesive film layer can be cut to size, for example, so that the adhesive film layer has the same surface area as each of the two carbon profile elements (one above and one below) that will be bonded by that adhesive film layer.

The carbon profile elements and the adhesive film layer(s) can be bonded using any suitable technique. In a preferred embodiment of the invention, the spar cap assembly is cured under the application of pressure and/or heat. To cure using pressure, the spar cap assembly may be placed into a vacuum bag and air is then extracted from the bag. The curing pressure in this case is atmospheric pressure. To cure using heat, the spar cap assembly can be placed into a suitable chamber such as an oven which can be raised to an appropriate temperature. Alternatively, a heated mould and/or heating blankets can be used to achieve a suitable curing temperature.

The spar cap assembly may comprise a single carbon profile stack. However, at a relatively wide part of the wind turbine blade, it may be difficult to construct a spar cap using a single carbon profile stack. This is because the spar cap must follow the 3D blade geometry, and when the blade geometry exhibits curvature, a pultruded profile element must "drape" to a certain extent, i.e. it must be able to twist and bend in the direction of the leading edge and also in the direction of the trailing edge. Draping properties are mainly related to the area moment of inertia of the profile element, and a large width is associated with a correspondingly large area moment of inertia, so that drape of a wide profile element can present a challenge. Therefore, in a preferred embodiment of the invention, two or more stacks are arranged side by side and bonded along their vertical side faces. Preferably, the method comprises a step of arranging a first carbon profile stack adjacent to a second carbon profile stack, and joining the opposing longitudinal vertical side faces of the carbon profile stacks by an adhesive film layer.

A spar cap assembly may just comprise several carbon profile elements with layers of solid sheet adhesive in between. The resulting assembly may, when cured, provide sufficient strength. However, in a preferred embodiment of the invention, the strength of the spar cap is increased by arranging a further layer of a suitable material on an outer face - the upper face and/or the lower face - of the spar cap assembly. An outer layer may, for example, be a sheet of prepreg carbon or fibreglass material and serves to improve the transverse strength of the spar cap particularly during handling. The strength of the assembly will depend also on the quality of the surface preparation. Therefore, the surfaces of the profiles are preferably treated appropriately, for example by means of peel-ply, sanding, sand-blasting, corona treatment etc.

In a preferred embodiment of the invention, the carbon profile elements are shaped to give a spar cap with slanted longitudinal side faces. The slanted side faces can ensure a better fit when the spar cap is being incorporated in the rotor blade body during the layup procedure.

Because carbon is electrically conductive, measures must be taken to avoid flash-over to the carbon spar cap when very large currents pass through the rotor blade LPS down conductor. This is generally done by providing an electrical connection between the LPS down conductor and the carbon spar cap. In a preferred embodiment of the invention, therefore, the method also comprises a step of connecting a number of electrical terminals to the spar cap. This can be done by attaching one end of a suitable metal or conductive strip to the spar cap. The electrically conductive strip can be provided in the form of a mat, for example a band of woven carbon fibre. The other end of the electrically conductive strip will later be connected to the LPS down conductor. In a preferred embodiment of the invention, the conductive mat is attached to the spar cap assembly by means of a conductive adhesive, which preferably bonds to the spar cap assembly when the spar cap assembly is being cured. In this way, the conductive strip or mat with its one free end for connecting to an LPS down conductor can already be provided as part of the spar cap assembly.

In a particularly preferred embodiment of the invention, a heat curing step makes use of the electrical terminals. In this preferred embodiment, the spar cap assembly is cured by applying a voltage across the electrical terminals. The current passing through the carbon profiles in the spar cap assembly results in the generation of heat (Joule effect), which can be sufficient to cure the adhesive(s) in the spar cap assembly. The heat-curing step can be carried out by determining a suitable voltage to apply, connecting one or more voltage sources between one or more terminal pairs, and monitoring the temperature at one or more positions along the spar cap. When the required curing temperature has been reached, this is maintained until the required duration has elapsed. The voltage sources are then disconnected and the spar cap is allowed to cool. This heat curing step is significantly faster and more economical than a comparable VARTM procedure used to manufacture the prior art spar cap assemblies.

Preferably, the inventive spar cap is constructed to be incorporated in a relatively long rotor blade, for example with a length in the region of 50 - 150 m. The airfoil portion of the blade is generally significantly thicker in the region closer to the root, and becomes ever thinner in the direction of the tip. However, carbon profile elements may only be provided in a certain range of thicknesses. In a preferred embodiment of the invention, therefore, a single thickness is selected for all carbon profile elements, and the spar cap comprises a greater number of carbon profile elements at the root end and a smaller number of carbon profile elements at the tip end.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 indicates the locations of spar caps inside a wind turbine rotor blade;
Fig 2 illustrates the assembly of a stack of CFRP profiles and adhesive film sheets;
Figs 3 - 5 show cross-sections through various possible spar cap assemblies for the inventive spar cap;
Fig 6 shows a perspective view of a cross-section though an embodiment of the inventive spar cap;
Fig 7 shows an embodiment of the prior art spar cap assembly.

In the diagrams, like numbers refer to like objects throughout. Objects in the diagrams are not necessarily drawn to scale.

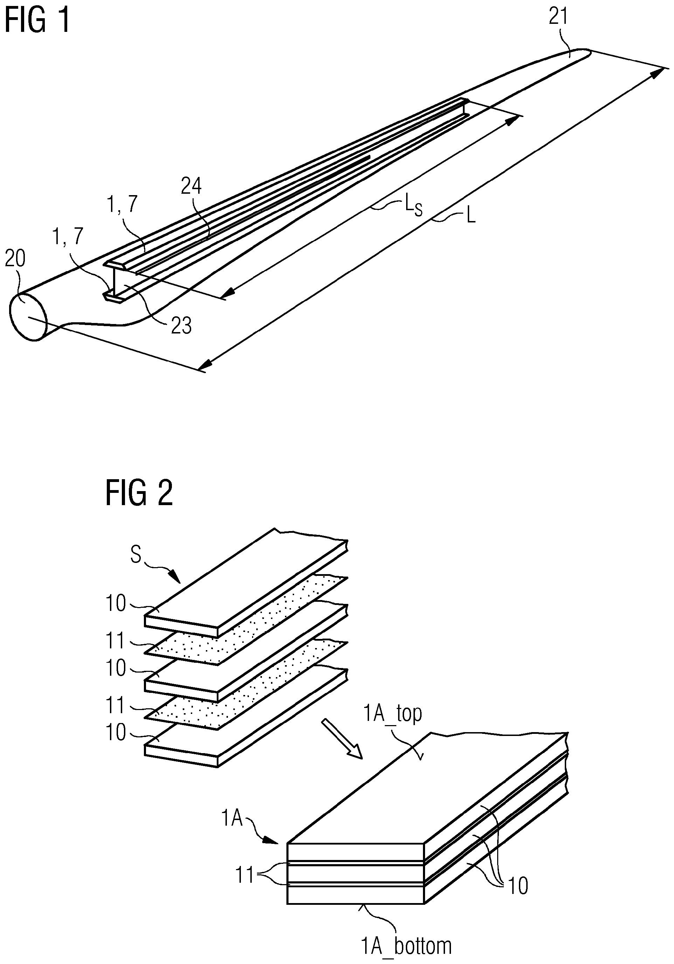

Fig 1 shows a wind turbine rotor blade 2 and indicates the position of a spar cap 1, 7 on both sides of an airfoil portion of the blade 2. The rotor blade 2 can be very long, for example a rotor blade of a multi-megawatt wind turbine can easily have a length L in the region of 50 m or more, so that the materials used for the blade 2 should be as light as possible while also contributing to the structural strength of the rotor blade 2.

The spar caps 1, 7 with length L_{S} are effectively embedded in the composite layers of the rotor blade body, and a shear web 23 extends between the spar caps 1, 7. A down conductor 24 of a rotor blade LPS can be arranged along the shear web 23 as shown here.

The diagram shows a single spar cap 1, 7 on either side of the web 23, but it will be understood that a rotor blade may be constructed to incorporate more than two spar caps, and may for example be constructed using four spar caps and two webs.

The spar cap 1, 7 usually starts at a distance of up to 4 m from the blade root 20, and extends to within 0.5 - 2 m from the blade tip 21. Generally, any CFRP elements of the spar cap are not used at the outer end of the spar cap (close to the blade tip 21) in order to reduce the risk of a direct lightning strike. Instead, the CFRP portion of the spar cap transitions to GFRP used to construct the thin outer section of the spar cap.

During blade manufacture, the pre-casted CFRP spar cap assembly is incorporated in the GFRP layup using moulding techniques that will be known to the skilled person.

Fig 2 indicates the assembly of a stack S of pultruded CFRP profiles 10 and adhesive film sheets 11 (upper left of the diagram). The resulting spar cap assembly 1A is indicated on the lower right of the diagram. The spar cap assembly 1A will be cured to result in the inventive spar cap. A carbon profile 10 can have an overall rectangular shape as well as an essentially rectangular cross-section as shown here. The adhesive film sheets 11 arranged between the profiles 10 can be any suitable kind of adhesive film that can be cut to size. The entire assembly 1A can be placed in a vacuum bag as will be known to the skilled person, so that that it can be cured by the application of pressure and/or heat. During the curing step, the adhesive softens and bonds to the faces of the carbon profile elements 10. The uniform thickness of the adhesive sheets 11 and the fact that each sheet 11 completely fills the space between adjacent carbon elements 10 ensures that defects such as kissing bonds can be greatly reduced. In this way, it is possible to manufacture a structurally reliable precast carbon spar cap in an economical manner.

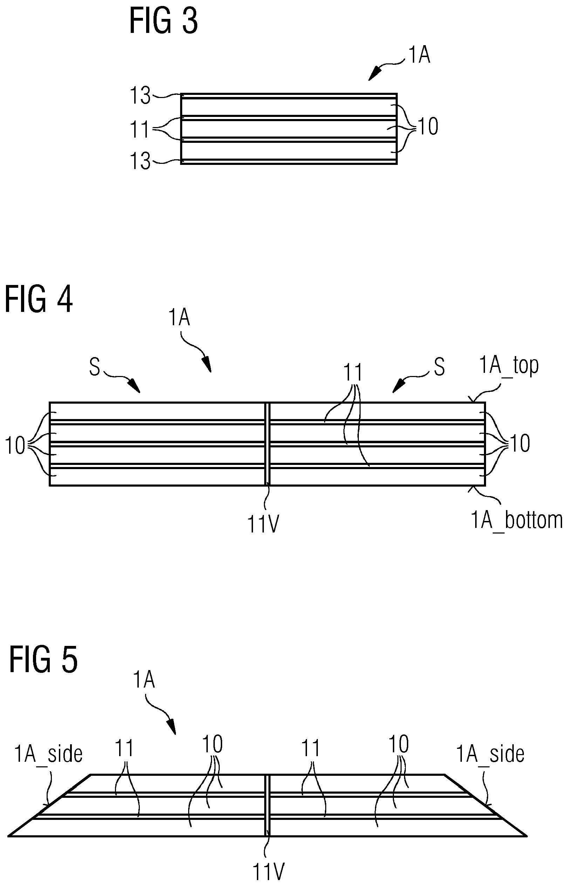

Fig 3 shows a cross-section through an embodiment of the inventive spar cap assembly 1A manufactured as explained in Fig 2 above. Here, additional prepreg CFRP or glass fibre reinforced layers 13 are arranged on the bottom surface 1A_bottom and top surface 1A_top of the stack S, i.e. underneath and on top of the stack S before curing, in order to give transverse strength during handling of the spar cap 1 and during the lifetime of the blade. During the curing step, the resin already present in the prepreg layers softens and bonds to the outer faces 1A_top, 1A_bottom of the spar cap assembly 1A.

Fig 4 shows a cross-section through a spar cap assembly 1A for a further embodiment of the inventive spar cap manufactured as explained in Fig 2 above. Here, two stacks S are placed side by side and a vertical sheet 11V or block 11V of adhesive is arranged between the opposing vertical side faces of the stacks S.

Fig 5 shows a cross-section through a spar cap assembly 1A for a further embodiment of the inventive spar cap, based on the embodiment of Fig 4 above. Here, the outer side face 1A_side of each stack S is inclined or slanted. This is achieved by selecting carbon elements 10 that each has an appropriate width and one appropriately slanted longitudinal edge. The advantage of this design is that it provides a substitute for the balsa wedges that are usually incorporated in a prior art spar cap manufactured using VARTM.

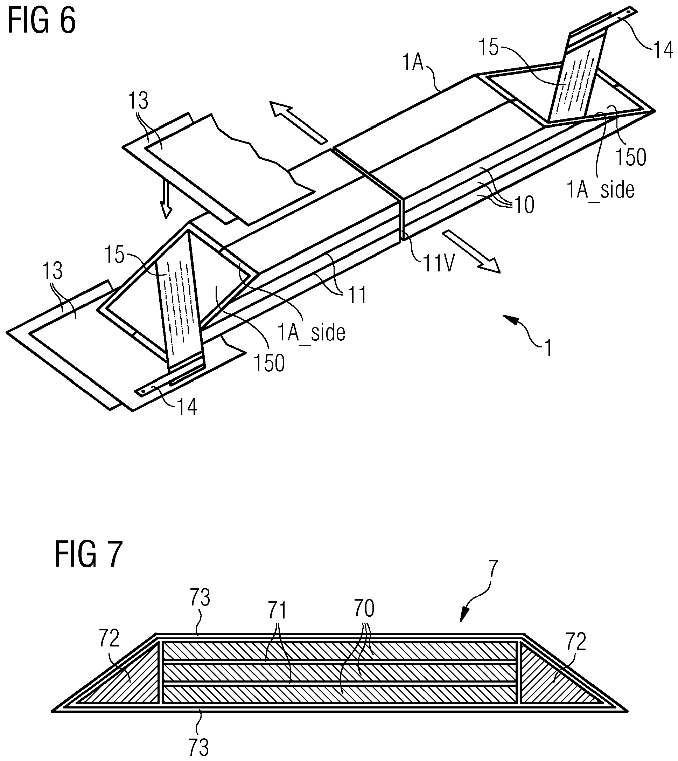

Fig 6 shows a perspective view of a narrow "slice" through a spar cap 1 manufactured as explained in Fig 5 above. The spar cap 1 may be assumed to extend in a direction from blade root towards the blade tip as indicated by the arrows. The diagram shows how electric terminals 14 may be connected by means of conductive mats 15 to the inclined side faces 1A_side of the spar cap assembly 1A. In this exemplary embodiment, a conductive mat 15 is bonded to a side face 1A_side of the spar cap assembly 1A using a sheet 150 of conductive adhesive. These can be connected later to the down conductor of the rotor blade LPS. However, they may also be used in the curing step. By connecting a voltage between the pair of terminals 14, a current will flow through the carbon profiles 10, thereby raising the temperature of the assembly 1A and softening the adhesive sheets 11 so that all parts of the assembly are thoroughly wet by the adhesive, which hardens upon cooling to give a structurally robust spar cap. The diagram also indicates cover layers 13 that are used to wrap or enclose the spar cap assembly 1A.

Fig 7 shows a prior art spar cap 7. Here, pultruded CFRP profiles 70 are stacked on top and beside each other. Fibre layers 71 comprising glass fibre, aramid etc., are arranged between the profiles 70. Balsa wedges 72 are arranged along the outer sides of the stack. Covering layers 73 of a glass fibre reinforced polymer are used to wrap the assembly, which is then placed in a vacuum bag for a VARTM procedure (with which the skilled person will be familiar) in which resin in liquid state is injected into the stack and drawn through the various layers by vacuum action. When resin completely permeates the assembly, heat is used to cure the assembly. As mentioned in the introduction, the VARTM process is associated with various drawbacks such as the relatively high likelihood of kissing bonds between the layers of the finished spar cap 7, and the risk of other defects such as air entrapment, voids, poor impregnation, etc. In addition, there are problems associated with handling liquid resin, costs arising from compliance with health and safety requirements, and costs arising from the generally time-consuming curing process that requires significant amounts of energy and capital expenditure.

Although the present invention has been disclosed in the form of preferred embodiments and variations thereon, it will be understood that numerous additional modifications and variations could be made thereto without departing from the scope of the invention. For example, although the carbon profile elements were described above as essentially straight elements, they might have any suitable shape, for example curved and/or corrugated shapes.

For the sake of clarity, it is to be understood that the use of "a" or "an" throughout this application does not exclude a plurality, and "comprising" does not exclude other steps or elements.

## Claims

1. A method of manufacturing a wind turbine rotor blade spar cap (1), which method comprises
- providing a plurality of carbon profile elements (10);
- providing a number of adhesive film layers (11);
- preparing a spar cap assembly (1A) by arranging the carbon profile elements (10) in a stack (S) and arranging an adhesive film layer (11) between adjacent carbon profile elements (10) of the stack (S); and
- curing the spar cap assembly (1A).

2. A method according to claim 1, wherein the spar cap assembly (1A) is cured under the application of pressure and/or heat.

3. A method according to claim 1 or claim 2, comprising a step of arranging a first stack (S) adjacent to a second stack (S), and joining the opposing longitudinal side faces (1A_side) by a vertical adhesive film layer (11V).

4. A method according to any of the preceding claims, comprising a step of arranging an outer layer (13) on an outer face (1A_top, 1A_bottom) of the spar cap assembly (1A).

5. A method according to any of the preceding claims, comprising a step of connecting a number of electrical terminals (14) to the spar cap assembly (1A).

6. A method according to claim 5, wherein the curing step is performed by applying a voltage across two electrical terminals (14) of the spar cap assembly (1A).

7. A wind turbine rotor blade spar cap (1) comprising a plurality of carbon profile elements (10) and a number of adhesive film layers (11), arranged in a stack (S) and cured using the method according to any of claims 1 to 6.

8. A spar cap according to claim 7, wherein a carbon profile element (10) comprises a preformed carbon element (10).

9. A spar cap according to claim 7 or claim 8, wherein the carbon profile elements (10) are shaped to give a stack (S) with slanted longitudinal side faces (1A_side).

10. A spar cap according to any of claims 7 to 9, wherein an adhesive film layer (11) in its uncured state comprises an adhesive in solid sheet form.

11. A spar cap according to any of claims 7 to 10, wherein an adhesive film layer (11) comprises a conductive adhesive material.

12. A spar cap according to any of claims 7 to 11, comprising at least one conductive mat (15) arranged to electrically connect an electrical terminal (14) to the spar cap assembly (1A).

13. A spar cap according to any of claims 7 to 12, constructed to extend from a blade root end (20) towards a blade tip end (21), and wherein the spar cap (1) comprises a greater number of carbon profile elements (10) at the root end (20) and a smaller number of carbon profile elements (10) at the tip end (21).

14. A spar cap according to any of claims 7 to 13, constructed to extend from a blade root end (20) towards a blade tip end (21), and wherein the thickness of the carbon profile elements (10) at the root end (20) exceeds the thickness of the carbon profile elements (10) at the tip end (21) .

15. A wind turbine rotor blade (2) comprising a spar cap (1) according to any of claims 7 to 14.
